# EUROPEAN PATENT SPECIFICATION

(11) **EP 3 330 105 B1**
(45) Date of publication and mention of the grant of the patent: **01.05.2019**
(21) Application number: 16832962.1
(22) Date of filing: 29.07.2016
(51) Int. Cl.: B60C 11/16

(54) **TIRE**
REIFEN
PNEU

(30) Priority: 31.07.2015 JP 2015152445
(43) Date of publication of application: 06.06.2018
(73) Proprietor: Bridgestone Corporation, Tokyo 104-8340 (JP)
(72) Inventor: MAEDA, Shimpei, Tokyo 104-8340 (JP); ITO, Tomoaki, Tokyo 104-8340 (JP)
(74) Representative: Oxley, Robin John George
(86) International application number: PCT/JP2016/072390
(87) International publication number: WO 2017/022683

(56) References cited:
- EP-A1- 2 243 638
- EP-A1- 2 243 638
- DE-A1-102009 044 767
- GB-A- 1 480 929
- JP-A- S5 945 203
- JP-A- 2007 050 718
- JP-A- 2012 001 120
- JP-A- 2014 128 886
- JP-U- S 628 105

## Description

### Technical Field

The present invention relates to a tire having a plurality of studs spaced apart in a ground-contact surface of a tread section.

### Background Art

As a tire with an improved performance (ice-performance) on an icy road surface including a snowy-and-icy road surface, a tire having a plurality of studs on a ground-contact surface of a tread section is known. During the rotation of the tire associated with the travelling of a vehicle, the studs contact with an icy road surface to exhibit the ice-performance of the tire. Moreover, conventionally, a tire is known, in which the number of stud pins (studs) on an inner side is different from that on an outer side in the vehicle width direction, thereby exhibiting a sufficient braking performance (see Patent Literature 1).

However, in the conventional tire, generally, in order to make a stud efficiently contact with an icy road surface, a plurality of studs are uniformly arranged in the ground-contact surface of a tread section. Accordingly, during the rotation of a tire, the vibration noise of the tire of a specific frequency may increase. Therefore, for the conventional tire, in order to cope with the noise generated by the tire, the vibration noise generated by the vibration of the tire is required to be reduced. At the same time, the ice-performance of the tire on an icy road surface also needs to be maintained.

Reference is also made to EP 2243638 A1, on which the preamble of independent claim 1 is based, which discloses a method for designing a studded tire, DE 10 2009 044767 A1, which discloses a vehicle tire and GB 1480929 A, which discloses studded tires.

### Citation List

### Patent Literature

PTL 1: Japanese Patent Laid-Open No. 2009-23604

### Summary of Invention

### Technical Problem

The present invention has been made in view of the above-described conventional problem, and has an object to reduce the vibration noise of a tire having a plurality of studs spaced apart in the ground-contact surface of a tread section while maintaining the ice-performance of the tire during the rotation of the tire.

### Solution to Problem

In accordance with the present invention there is provided a tire as set out in independent claim 1. Preferred embodiments of the present invention are laid down in the appended dependent claims.

### Advantageous Effects of Invention

According to the present invention, it is possible to reduce the vibration noise of a tire having a plurality of studs spaced apart on the ground-contact surface of a tread section while maintaining the ice-performance of the tire during the rolling of the tire.

### Brief Description of Drawings

FIG. 1 is a plan view illustrating a tread pattern of a tire of this embodiment.
FIG. 2 is a plan view illustrating the studs provided in the tire of this embodiment.
FIG. 3 illustrates a plurality of studs of one circumferential stud row.

### Description of Embodiments

An embodiment of the tire of the present invention will be explained with reference to the drawings.

The tire of the embodiment is a pneumatic tire for using on an icy road surface, and is formed in a well-known structure using conventional tire components. That is, a tire is provided with a pair of bead sections, a pair of sidewall sections located outside in the tire radial direction of the pair of bead sections, a tread section to contact with a road surface, and a pair of shoulder sections located between the tread section and the pair of sidewall sections. Moreover, the tire is provided with a pair of bead cores, a carcass, a belt arranged on the outer peripheral side of the carcass, and a tread rubber. A predetermined tread pattern is formed on the ground-contact surface of the tread section.

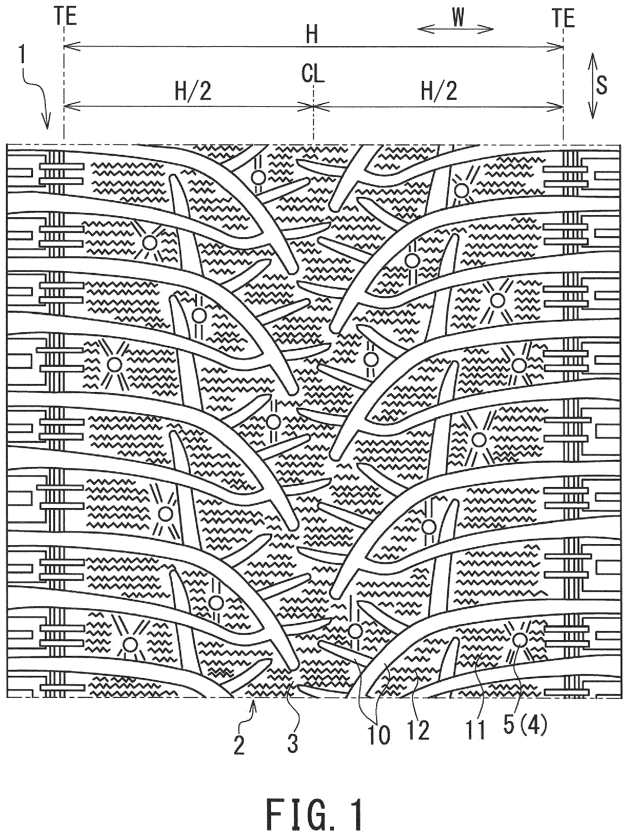

FIG. 1 is a plan view illustrating a tread pattern of a tire 1 of the embodiment and illustrating a part of a tread section 2 in a tire circumferential direction S by developing.

As illustrated, the tire 1 is provided with a plurality of grooves 10 formed on a ground-contact surface 3 of the tread section 2, a plurality of blocks 11 formed by the plurality of grooves 10, and a plurality of sipes 12 formed on the block 11. The ground-contact surface 3 of the tread section 2 is the circumferential surface (tread) of the tread section 2 contacting with a road surface (icy road surface). Tread ground-contact ends TE are both ends of the ground-contact surface 3 in a tire width direction W.

Here, the tread ground-contact ends TE are both ends in the tire width direction W of the ground-contact surface 3 when the tire 1 is installed on a standard rim, filled with air of a predetermined inner pressure, and loaded with the maximum load capacity. The standard rim is the standard rim defined in JATMA YEAR BOOK (Japan Automobile Tyre Manufacturers Association Standard). The maximum load capacity is the maximum load capacity (the load in bold print in the inner pressure-load capacity chart) in the applicable size/ply rating in JATMA YEAR BOOK. The predetermined inner pressure is the inner pressure of 100% of the air pressure (the maximum air pressure) corresponding to the maximum load capacity.

The ground-contact surface 3 of the tread section 2 is the surface of the tread section 2 between the both the tread ground-contact ends TE, and a tread ground-contact width H is the distance between the both the tread ground-contact ends TE in the tire width direction W. Moreover, a center line CL is the line located at the center in the tire width direction W of the ground-contact surface 3, and is matched with the equator line of the tire 1. The distance between the center line CL of the ground-contact surface 3 and the tread ground-contact end TE in the tire width direction W is a half distance (H/2) of the tread ground-contact width H. Note that, when another standard is applied in a place of use or a place of manufacture of the tire 1, the tread ground-contact end TE and the like are defined in accordance with the respective standards. Another standard is, for example, YEAR BOOK of TRA (The Tire and Rim Association Inc.) in the United States of America, or STANDARDS MANUAL of ETRTO (The European Tyre and Rim Technical Organization) in Europe.

The tire 1 is provide with a plurality of stud holes 4 formed in the ground-contact surface 3 of the tread section 2 and a plurality of studs 5 each held by the stud hole 4. The tire 1 is a studdable tire with the plurality of stud holes 4, and is also a studded tire with the plurality of studs 5. The stud 5 is also referred to as a spike or pin, is hammered into the stud hole 4 and attached to the tread section 2. The plurality of studs 5 (stud holes 4) are spaced from each other on the ground-contact surface 3 of the tread section 2 on the basis of a predetermined arrangement pattern.

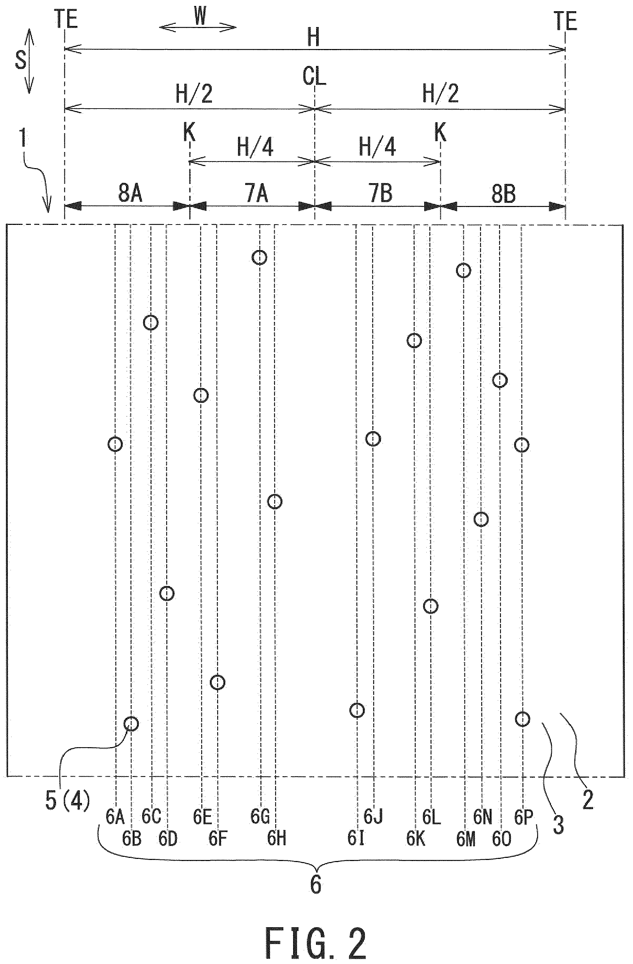

FIG. 2 is a plan view illustrating the studs 5 provided in the tire 1 of the embodiment, and is a view omitting the grooves 10, blocks 11, and sipes 12 of the plan view illustrated in FIG. 1. In FIG. 2, the plurality of studs 5 (stud holes 4) is indicated by a circle mark, respectively.

As illustrated, the tire 1 is provided with a plurality of circumferential stud rows 6 (here, the first to sixteenth stud rows 6A to 6P) each comprising the plurality of studs 5. Note that, within the range of the ground-contact surface 3 illustrated in FIG. 2, only one or two studs 5 among the plurality of studs 5 are illustrated in each circumferential stud row 6. In actuality, the plurality of studs 5 are arranged spaced apart throughout tire circumferential direction S of the circumferential stud row 6.

The positions of the plurality of circumferential stud rows 6 in the tire width direction W differ from each other, and the plurality of circumferential stud rows 6 are arranged spaced apart in the tire width direction W. Moreover, the plurality of circumferential stud rows 6 consist of the plurality of studs 5 which are six or more than six, respectively. In each of the plurality of circumferential stud rows 6, the plurality of studs 5 are arranged spaced apart sequentially along the tire circumferential direction S.

The plurality of studs 5 in each circumferential stud row 6 are arranged at the same position in the tire width direction W, and are arranged in the tire circumferential direction S. Moreover, the studs 5 of the circumferential stud row 6 adjacent to each other in the tire width direction W are arranged at different positions each other in the tire circumferential direction S.
In each of the circumferential stud rows 6, the number of studs 5 is expressed by T, the interval (stud interval) of the plurality of studs 5 in the tire circumferential direction S by L(n) (n is an integer from 1 to T), and the average value of the stud interval L(n) by La. In this case, the plurality of studs 5 of each circumferential stud row 6 are arranged so as to satisfy a predetermined condition defined by L(n) and La.

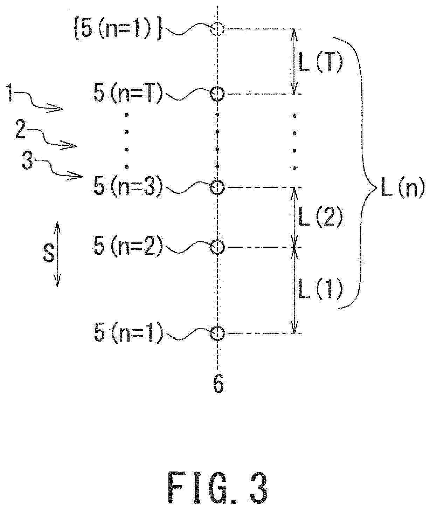

FIG. 3 illustrates the plurality of studs 5 of one circumferential stud row 6, schematically illustrating the plurality of studs 5 of one round of the tire 1 while omitting some of studs 5 of the circumferential stud row 6. Moreover, FIG. 3 illustrates from the first stud 5 (n=1) to T-th stud 5 (n=T), and also illustrates, with a dotted line, the first stud 5 (n=1) located next to the stud 5 (n=T).

As illustrated, n is each natural number (1, 2, ..., T) from 1 to T corresponding to the number T of studs 5 in the circumferential stud row 6, and the stud interval L(n) is each of stud intervals (L(1), L(2) ... L(T)) from L(1) to L(T). Moreover, each of the plurality of stud intervals L(n) is the interval (circumferential direction intervals) of the studs 5 in the tire circumferential direction S adjacent to each other in the tire circumferential direction S, and is the n-th stud interval among a plurality of stud intervals of the circumferential stud row 6. The average value La of the stud interval L(n) is the average stud interval in the circumferential stud row 6, and is obtained by dividing a total value of all the stud intervals L(n) by the number T of studs 5.

In each of the circumferential stud rows 6, each of the plurality of stud intervals L(n) is equal to or more than (0.4×La) and is equal to or less than (1.7×La), satisfies the condition (0.4×La≤L(n)≤1.7×La). Moreover, the plurality of stud intervals L(n) include one or more stud intervals L(n) (referred to as a specific stud interval Lt) each satisfying the condition of (1.1×La≤L(n)≤1.7×La). The specific stud interval Lt is equal to or more than (1.1×La) and is equal to or less than (1.7×La), and does not continuously appear along the tire circumferential direction S in the circumferential stud row 6. That is, the specific stud interval Lt is not continuously appear multiple times among the other stud intervals L(n), but appears only once among the other stud intervals L(n).

When the specific stud interval Lt appears once after another stud interval L(n), another stud interval L(n) appears after the specific stud interval Lt. Another stud interval L(n) is the stud interval L(n) other than the specific stud interval Lt, and satisfies the condition of (0.4×La≤L(n)≤1.7×La) but does not satisfy the condition of (1.1×La≤L(n)≤1.7×La). That is, another stud interval L(n) satisfies the condition of (0.4×La≤L(n)<1.1×La).

The ground-contact surface 3 (see FIG. 2) of the tread section 2 is divided into four areas by the center line CL in the tire width direction W, two tread ground-contact ends TE, and two division lines K. The two division lines K of the ground-contact surface 3 are the lines (border lines) spaced apart by a quarter distance (H/4) of the tread ground-contact width H from the center line CL toward the both outsides in the tire width direction W. Moreover, four areas of the ground-contact 3 are two center areas 7A, 7B on both sides of the center line CL, and two shoulder areas 8A, 8B on the outer side (shoulder section side) of the center areas 7A, 7B in the tire width direction W. The center areas 7A, 7B are located between the center line CL and the division line K, while the shoulder areas 8A, 8B are located between the division line K and tread ground-contact end TE on the outer side of each division line K in the tire width direction W.

The average value of the number of studs 5 of the circumferential stud row 6 located in the center areas 7A, 7B is expressed by Nc, while the average value of the numbers of studs 5 of the circumferential stud row 6 located in the shoulder areas 8A, 8B is expressed by Ns.
In this case, the average values Nc, Ns of the number of studs satisfy the condition of Ns>Nc, and the average value Ns of the number of studs in the shoulder areas 8A, 8B is larger than the average value Nc of the number of studs in the center areas 7A, 7B.

The numbers of studs 5 of all the circumferential stud rows 6 in the center areas 7A, 7B are summed, and the resulting total number of studs 5 is divided by the number of the circumferential stud rows 6 in the center areas 7A, 7B. In this manner, the average number (average value Nc) of the studs 5 of each circumferential stud row 6 in the center areas 7A, 7B is calculated. Moreover, the numbers of studs 5 of all the circumferential stud rows 6 in the shoulder areas 8A, 8B are summed, and the resulting total number of studs 5 is divided by the number of the circumferential stud rows 6 in the shoulder areas 8A, 8B. In this manner, the average number (average value Ns) of the studs 5 of each circumferential stud row 6 in the shoulder areas 8A, 8B is calculated.

In each of two shoulder areas 8A, 8B, the number of studs 5 of the circumferential stud row 6 located on the innermost side in the tire width direction W is expressed by Mi, while the number of studs 5 of the circumferential stud row 6 located on the outermost side in the tire width direction W is expressed by Mo. In this case, the average value Ns of the number of studs and numbers Mi, Mo of studs in the shoulder areas 8A, 8B satisfy the condition of Mi>Ns>Mo, and each value increases in order of Mo, Ns, and Mi. Moreover, the number Mo of studs is smaller than the average value Ns of the number of studs and the number Mi of studs, and the average value Ns of the number of studs is a value between the numbers Mi, Mo of studs.

Specifically, in one shoulder area 8A (to the left in FIG. 2), the number Mi of studs of the fourth circumferential stud row 6D on the innermost side is larger than the number Mo of studs of the first circumferential stud row 6A on the outermost side. Moreover, in another shoulder area 8B (to the right in FIG. 2), the number Mi of studs of the thirteenth circumferential stud row 6M on the innermost side is larger than the number Mo of studs of the sixteenth circumferential stud row 6P on the outermost side. In each of the shoulder areas 8A, 8B, the number of studs 5 of the circumferential stud row 6 decreases as going from the inner side to the outer side in the tire width direction W.

In the tire 1 explained above, all the circumferential stud rows 6 each has six or more than six studs 5. Therefore, a variation of the number of studs 5 among the circumferential stud rows 6 can be suppressed and the ice-performance of the tire 1 can be surely maintained by the studs 5 sequentially contacting an icy road surface. In contrast, when the circumferential stud row 6 having less than six studs 5 exists among the plurality of circumferential stud rows 6, a variation of the number of studs 5 might be occurred among the circumferential stud rows 6.

Moreover, since in each of the circumferential stud rows 6 the stud interval L(n) satisfies the condition of (0.4×La≤L(n)≤1.7×La), a variation of the stud intervals L(n) is suppressed in each circumferential stud row 6. In contrast, when the stud interval L(n) is less than (0.4×La) or more than (1.7×La), a difference between the stud intervals L(n) or the coarse-dense degree of a plurality of stud intervals L(n) might be increased to affect the ice-performance of the tire 1. Under the condition of (0.4×La≤L(n)≤1.7×La), the plurality of studs 5 is arranged so that the coarse-dense degree of the plurality of stud intervals L(n) is moderated and the stud interval L(n) is to be the interval requested to the stud 5. As the result, the ice-performance of the tire 1 will be improved.

One or more specific stud intervals Lt each satisfying the condition of (1.1×La≤L(n)≤1.7×La) are included in the plurality of stud intervals L(n) of each circumferential stud row 6 and are also not continuous along the tire circumferential direction. Therefore, the frequencies of the vibration input to the tire 1 are distributed to reduce the vibration noise caused by the vibration of the tire 1. Moreover, the coarse-dense degree of the plurality of stud intervals L(n) is reduced in the circumferential stud rows 6, so the ice-performance of the tire 1 is maintained. In contrast, when the specific stud interval Lt is less than (1.1×La), the effect on distributing frequencies might be affected. Moreover, when the specific stud intervals Lt are continuous, the ice-performance of the tire 1 might be affected.

As explained above, the tire 1 of the embodiment is capable of reducing the vibration noise of the tire 1 while maintaining the ice-performance of the tire 1 during the rotation of the tire 1 on the icy road surface. As the result, the noise generated by the tire 1 can be reduced as compared with the conventional tire.

Since the lengths of the outer circumference of the shoulder areas 8A, 8B are shorter than the lengths of the outer circumference of the center areas 7A, 7B, on the ground-contact surface 3 of the tread section 2, the shoulder areas 8A, 8B will always rotate so as to be dragged during the rotation of the tire 1. Therefore, the studs 5 in the shoulder areas 8A, 8B have a greater effect on the braking performance of the tire 1 than the studs 5 in the center areas 7A, 7B. Here, the average value Ns of the number of studs in the shoulder areas 8A, 8B is larger than the average value Nc of the number of studs in the center areas 7A, 7B (Ns>Nc) . Thus, the braking performance of the tire 1 on an icy road surface can be improved.

In the shoulder areas 8A, 8B of the ground-contact surface 3, the outer portion in the tire width direction W is the portion hard to contact with the road surface, and is made more difficult to contact with the road surface in particular at the time of a low load or when the tire 1 is cambered. Therefore, even if more studs 5 are arranged in the outer portion in the tire width direction W, these studs 5 cannot always be effectively utilized. Moreover, the outer portion in the tire width direction W is the portion with a great influence on the vibration noise of the tire 1.

In contrast, when the average value Ns of the number of studs and the numbers Mi, Mo of studs satisfy the condition of Mi>Ns>Mo in each of the shoulder areas 8A, 8B, the number Mo of studs of the circumferential stud row 6 located on the outermost side in the tire width direction W relatively decreases. As the result, the vibration noise of the tire 1 can be further reduced while suppressing the influence on the ice-performance of the tire 1. At the same time, the number Mi of studs of the circumferential stud row 6 located on the innermost side in the tire width direction W relatively increases, so the braking performance of the tire 1 on an icy road surface can be reliably improved by effectively utilizing the studs 5 in the shoulder areas 8A, 8B.

Note that, it is more preferable for the stud interval L(n) to satisfy the condition of (0.75×La≤L(n)≤1.25×La), while it is more preferable for the specific stud interval Lt to satisfy the condition of 1.1×La≤L(n)≤1.25×La. In this case, a variation of the stud intervals L(n) is further suppressed in each circumferential stud row 6 so as to improve the ice-performance of the tire 1. Moreover, it is more preferable to include two or more specific stud intervals Lt in the plurality of stud intervals L(n) of each circumferential stud row 6. Thus, the vibration noise of the tire 1 will be more reliably decreased.

During the rotation of the tire 1 associated with the travelling of a vehicle, a part of area (ground-contact area) of the tread section 2 (ground-contact surface 3) in the tire circumferential direction S is grounded on an icy road surface. In this case, only one stud 5 is more preferably located on a ground-contact line of the tread section 2. The ground-contact line of the tread section 2 is the border line (outer circumferential line of the ground-contact area) between the ground-contact area and non- ground-contact area of the tread section 2, and is also the ground-contact end of the ground-contact area located at the end in the tire circumferential direction S in the ground-contact area. The ground-contact area between two ground-contact lines of the tread section 2 is grounded on an icy road surface. Two ground-contact lines of the tread section 2 are a step-in ground-contact line corresponding to the step-in position of the tire 1 (tread section 2) and a kick-out ground-contact line corresponding to the kick-out position of the tire 1.

The vibration noise is generated when the stud 5 is grounded on an icy road surface and when the stud 5 leaves the icy road surface. Moreover, when two or more studs 5 are simultaneously located on the step-in ground-contact line or kick-out ground-contact line of the tread section 2, the generation timings of vibration noise is overlapped to increase the noise of the tire 1. Accordingly, during the rotation of the tire 1, it is more preferable that only one stud 5 is located on the step-in ground-contact line in a state where each of studs 5 is located on the step-in ground-contact line of the tread section 2. Moreover, it is more preferable that only one stud 5 is located on the step-in or kick-out ground-contact line in a state where each of studs 5 is located on the step-in or kick-out ground-contact line of the tread section 2. In this case, the noise of the tire 1 can be further reduced by dispersing the generation timings of vibration noise.

### (Tire test)

In order to confirm the effect of the present invention, two exemplary tires (referred to as examples 1, 2) corresponding to the tire 1 of the embodiment, two comparative exemplary tires (referred to as comparative examples 1, 2), and a conventional exemplary tire (referred to as a conventional example) were prepared, and the performances thereof were evaluated. The examples 1, 2, comparative examples 1, 2, and conventional example are the radial ply tires for an automobile having a tire size (205/55R16), and were installed on the same rim (6.5J16) and filled with air of the same inner pressure (200kPa). The plurality of circumferential stud rows 6 of each tire each includes six studs 5. The examples 1, 2, comparative examples 1, 2, and conventional example differ only in the arrangement pattern of the studs 5. In the comparative examples 1, 2, the specific stud intervals Lt were made continuous, while in the conventional example, the plurality of studs 5 of each circumferential stud row 6 was arranged at the same interval. The constitutions other than the presence or absence of the continuity of the specific stud interval Lt and the interval between the studs 5 are the same among the examples 1, 2, comparative examples 1, 2, and conventional example.

The vibration noise and ice-performance on an icy road surface were evaluated by testing the examples 1, 2, comparative examples 1, 2, and conventional example. Each of the examples 1, 2, comparative examples 1, 2, and conventional example was installed on all the rims of a vehicle, and each vehicle was caused to travel on an icy road surface. Sound was captured with a microphone inside the vehicle during the travelling of the vehicle to detect a noise energy.

Moreover, the brake performance (on-ice braking performance) on an icy road surface was evaluated by braking under the same conditions in each vehicle. In this case, the location of the vehicle was detected with a GPS (Global Positioning System) attached to the vehicle to measure the distance (braking distance) from the start of braking to the stoppage of the vehicle. The on-ice braking performances of the examples 1, 2, comparative examples 1, 2, and conventional example were evaluated by comparing the braking distances. All the tests using the examples 1, 2, comparative examples 1, 2, and conventional example were performed under the same conditions, and the test results were obtained under the same conditions.

**[Table 1]**

| | EXAMPLE 1 | COMPARATIVE EXAMPLE 1 | EXAMPLE 2 | COMPARATIVE EXAMPLE 2 | CONVENTIONAL EXAMPLE |
|---|---|---|---|---|---|
| STUD INTERVAL L(n) | 0.4∼1.7La | | 0.75∼1.25La | | La |
| SPECIFIC STUD INTERVAL Lt | 1.1∼1.7La | | 1.1∼1.25La | | - |
| PRESENCE OR ABSENCE OF CONTINUITY OF Lt | ABSENCE | PRESENCE | ABSENCE | PRESENCE | - |
| NOISE ENERGY (INDEX) | 76 | 73 | 76 | 73 | 100 |
| ON-ICE BRAKING PERFORMANCE (INDEX) | 99 | 89 | 100 | 96 | 100 |

Table 1 shows the noise energy and on-ice braking performance test results. The noise energy and on-ice braking performance are expressed by indexes when the index of the conventional example was defined as 100. A smaller numerical value of noise energy indicates a smaller noise energy and a higher effect on reducing vibration noise. Moreover, a larger numerical value of the on-ice braking performance indicates a higher on-ice braking performance and a higher ice-performance .

In the example 1 and comparative example 1, the stud interval L(n) satisfies the condition of 0.4×La≤L(n)≤1.7×La, and the specific stud interval Lt satisfies the condition of 1.1×La≤L(n)≤1.7×La. In the example 2 and comparative example 2, the stud interval L(n) satisfies the condition of 0.75×La≤L(n)≤1.25×La, and the specific stud interval Lt satisfies the condition of 1.1×La≤L(n)≤1.25×La. Moreover, in the examples 1, 2, there is no continuity of the specific stud interval Lt, i.e., the specific stud interval Lt is not continuous. In contrast, in the comparative examples 1, 2, there is continuity of the specific stud interval Lt, i.e., the specific stud interval Lt is continuous twice. In the conventional example, the stud interval L(n) is the average value La of the stud interval L(n).

As the results of the tests, the noise energies of the examples 1, 2 are 76 and 76, respectively, and are smaller than the noise energy of the conventional example. Moreover, the on-ice braking performances of the examples 1, 2 are 99 and 100, respectively, and are equivalent to the on-ice braking performance of the conventional example. In contrast, in the comparative examples 1, 2, although the noise energy is smaller than the conventional example, the on-ice braking performance is reduced less than the conventional example. The above results reveal that the examples 1, 2 are capable of reducing the vibration noise while maintaining the ice-performance. The above results also reveal that the ice-performance of the example 2 becomes higher than the ice-performance of the example 1.

### Reference Signs List

- 1: tire
- 2: tread section
- 3: ground-contact surface
- 4: stud hole
- 5: stud
- 6: circumferential stud row
- 7A, 7B: center area
- 8A, 8B: shoulder area
- 10: groove
- 11: block
- 12: sipe
- CL: center line
- H: tread ground-contact width
- K: division line
- S: tire circumferential direction
- TE: tread ground-contact end
- W: tire width direction

## Claims

1. A tire (1) having a plurality of studs (5) spaced apart in a ground-contact surface (3) of a tread section (2), the tire (1) comprising:
a plurality of circumferential stud rows (6) whose positions are different from each other in a tire width direction (W) and each of which is constituted by a plurality of studs (5) which are six or more than six and sequentially arranged along a tire circumferential direction (S), wherein
when in each of the circumferential stud rows (6), the number of studs (5) is expressed by T, a stud interval of the plurality of studs (5) in the tire circumferential direction (S) by L(n), wherein n is an integer from 1 to T, and an average value of the stud interval L(n) by La, each stud interval L(n) satisfies a condition of 0.4×La≤L(n)≤1.7×La, and
one or more specific stud intervals each satisfying a condition of 1.1×La≤L(n)≤1.7×La are included among the plurality of stud intervals of each circumferential stud row (6), and are not continuous along the tire circumferential direction (S),
the ground-contact surface (3) of the tread section (2) is divided into: two center areas (7A, 7B) each being located between a center line (CL) in the tire width direction (W) and a division line (K) spaced apart by a quarter distance (H/4) a tread ground-contact width (H) from the center line (CL) toward an outer side in the tire width direction (W); and two shoulder areas (8A, 8B) each being located between a respective division line (K) and a tread ground-contact end (TE) on an outer side of the respective division line (K) in the tire width direction (W), **characterized in that**
when an average value of the number of studs (5) of each circumferential stud row (6) located in the center areas (7A, 7B) is expressed by Nc, wherein the average value Nc is calculated by dividing the total number of studs (5) of all the circumferential stud rows (6) located in the center areas (7A, 7B) by the number of the circumferential stud rows (6) located in the center areas (7A, 7B), and an average value of the number of studs (5) of each circumferential stud row (6) located in the shoulder areas (8A, 8B) is expressed by Ns, wherein the average value Ns is calculated by dividing the total number of studs (5) of all the circumferential stud rows (6) located in the shoulder areas (8A, 8B) by the number of the circumferential stud rows (6) located in the shoulder areas (8A, 8B), the average values Nc, Ns satisfy a condition of Ns>Nc.

2. The tire (1) according to claim 1, wherein
when in each of the shoulder areas (8A, 8B), the number of studs (5) of the circumferential stud row (6) located on the innermost side in the tire width direction (W) is expressed by Mi and the number of studs (5) of the circumferential stud row (6) located on the outermost side in the tire width direction (W) is expressed by Mo, the average value Ns and the numbers Mi, Mo of studs (5) satisfy a condition of Mi>Ns>Mo.

3. The tire (1) according to claim 1 or 2, wherein
each stud interval L(n) satisfies a condition of 0.75×La≤L(n)≤1.25×La, and
the one or more specific stud intervals each satisfying a condition of 1.1×La≤L(n)≤1.25×La.

4. The tire (1) according to any of claims 1 to 3, wherein during a rotation of the tire (1), only one stud (5) is located on a step-in ground-contact line of the tread section (2) in a state where each of the studs (5) is located on the step-in ground-contact line of the tread section (2) corresponding to a step-in position of the tire.

5. The tire (1) according to any of claims 1 to 3, wherein during the rotation of the tire (1), only one stud (5) is located on a step-in or kick-out ground-contact line of the tread section (2) in a state where each of the studs (5) is located on the step-in or kick-out ground-contact line of the tread section (2) corresponding to a step-in or kick-out position of the tire.

## Patentansprüche

1. Reifen (1), der mehrere Stollen (5) aufweist, die in einer Bodenberührungsfläche (3) einer Laufflächensektion (2) voneinander beabstandet sind, wobei der Reifen (1) Folgendes umfasst:
mehrere umlaufende Stollenreihen (6), deren Positionen sich in einer Reifenbreitenrichtung (W) voneinander unterscheiden und deren jede aus mehreren Stollen (5) besteht, die sechs oder mehr als sechs und aufeinanderfolgend entlang einer Reifenumfangsrichtung (S) angeordnet sind, wobei,
wenn in jeder der umlaufenden Stollenreihen (6) die Anzahl von Stollen (5) durch T, ein Stollenabstand der mehreren Stollen (5) in der Reifenumfangsrichtung (S) durch L(n), wobei n eine ganze Zahl von 1 bis T ist, und ein durchschnittlicher Wert des Stollenabstandes L(n) durch La ausgedrückt wird, jeder Stollenabstand L(n) eine Bedingung von 0,4 × La ≤ L(n) ≤ 1,7 × La erfüllt, und
ein oder mehrere spezifische Stollenabstände, die jeweils eine Bedingung von 1,1 × La ≤ L(n) ≤ 1,7 × La erfüllen, unter den mehreren Stollenabständen jeder umlaufenden Stollenreihe (6) eingeschlossen sind und entlang der Reifenumfangsrichtung (S) nicht durchgehend sind,
die Bodenberührungsfläche (3) der Laufflächensektion (2) in Folgendes geteilt ist: zwei Mittelbereichen (7A, 7B), die jeweils zwischen einer Mittellinie (CL) in der Reifenbreitenrichtung (W) und einer Teilungslinie (K), die von der Mittellinie (CL) um ein Viertel einer Entfernung (H/4) einer Laufflächen-Bodenberührungsbreite (H) zu einer in der Reifenbreitenrichtung (W) äußeren Seite hin entfernt ist, und zwei Schulterbereichen (8A, 8B), die jeweils zwischen einer jeweiligen Teilungslinie (K) und einem Laufflächen-Bodenberührungsende (TE) auf einer in der Reifenbreitenrichtung (W) äußeren Seite der jeweiligen Teilungslinie (K) angeordnet sind, **dadurch gekennzeichnet, dass**,
wenn ein durchschnittlicher Wert der Anzahl von Stollen (5) jeder umlaufenden Stollenreihe (6), die in den Mittelbereichen (7A, 7B) angeordnet ist, durch Nc ausgedrückt wird, wobei der durchschnittliche Wert Nc durch Dividieren der Gesamtanzahl von Stollen (5) aller umlaufenden Stollenreihen (6), die in den Mittelbereichen (7A, 7B) angeordnet sind, durch die Anzahl der umlaufenden Stollenreihe (6), die in den Mittelbereichen (7A, 7B) angeordnet sind, berechnet wird,
und ein durchschnittlicher Wert der Anzahl von Stollen (5) jeder umlaufenden Stollenreihe (6), die in den Schulterbereichen (8A, 8B) angeordnet ist, durch Ns ausgedrückt wird, wobei der durchschnittliche Wert Ns durch Dividieren der Gesamtanzahl von Stollen (5) aller umlaufenden Stollenreihen (6), die in den Schulterbereichen (8A, 8B) angeordnet sind, durch die Anzahl der umlaufenden Stollenreihe (6), die in den Schulterbereichen (8A, 8B) angeordnet sind, berechnet wird, die durchschnittlichen Werte Nc, Ns eine Bedingung von Ns > Nc erfüllen.

2. Reifen (1) nach Anspruch 1, wobei,
wenn in jedem der Schulterbereiche (8A, 8B) die Anzahl von Stollen (5) der umlaufenden Stollenreihe (6), die auf der in der Reifenbreitenrichtung (W) innersten Seite angeordnet ist, durch Mi ausgedrückt wird und die Anzahl von Stollen (5) der umlaufenden Stollenreihe (6), die auf der in der Reifenbreitenrichtung (W) äußersten Seite angeordnet ist, durch Mo ausgedrückt wird, der durchschnittliche Wert Ns und die Anzahlen Mi, Mo von Stollen (5) die Bedingung Mi > Ns > Mo erfüllen.

3. Reifen (1) nach Anspruch 1 oder 2, wobei
jeder Stollenabstand L(n) eine Bedingung von 0,75 × La ≤ L(n) ≤ 1,25 × La erfüllt und
der eine oder die mehreren spezifischen Stollenabstände jeweils eine Bedingung von 1,1 × La ≤ L(n) ≤ 1,25 × La erfüllen.

4. Reifen (1) nach einem der Ansprüche 1 bis 3, wobei
während einer Drehung des Reifens (1) nur ein Stollen (5) auf einer Bodenberührung-Eintrittslinie der Laufflächensektion (2) angeordnet ist, in einem Zustand, in dem jeder der Stollen (5) auf der Bodenberührung-Eintrittslinie der Laufflächensektion (2) angeordnet ist, die einer Eintrittsposition des Reifens entspricht.

5. Reifen (1) nach einem der Ansprüche 1 bis 3, wobei
während einer Drehung des Reifens (1) nur ein Stollen (5) auf einer Bodenberührung-Eintritts- oder -Austrittslinie der Laufflächensektion (2) angeordnet ist, in einem Zustand, in dem jeder der Stollen (5) auf der Bodenberührung-Eintritts oder - Austrittslinie der Laufflächensektion (2) angeordnet ist, die einer Eintritts oder - Austrittsposition des Reifens entspricht.

## Revendications

1. Bandage pneumatique (1) comportant plusieurs crampons (5) espacés dans une surface de contact au sol (3) d'une section de bande de roulement (2), le bandage pneumatique (1) comprenant :
plusieurs rangées circonférentielles de crampons (6) dont les positions sont différentes les unes des autres dans une direction de la largeur du bandage pneumatique (W), et dont chacune étant constituée par plusieurs crampons (5), au nombre de six ou plus de six, et agencés de manière séquentielle le long d'une direction circonférentielle du bandage pneumatique (S), dans lequel :
lorsque dans chacune des rangées de circonférentielle de crampons (6), le nombre de crampons (5) est exprimé par T, un intervalle entre les crampons des plusieurs crampons (5), dans la direction circonférentielle du bandage pneumatique (S) par L (n), n étant un nombre entier compris entre 1 et T, et une valeur moyenne de l'intervalle entre les crampons L (n) par La, chaque intervalle entre les crampons L (n) satisfait une condition de 0,4 x La ≤ L(n) ≤ 1,7 x La ; et
un ou plusieurs intervalles spécifiques entre les crampons satisfaisant chacun une condition de 1,1 x La ≤ L(n) ≤ 1,7 x La, sont inclus parmi les plusieurs intervalles entre les crampons de chaque rangée circonférentielle de crampons (6) et ne sont pas continus le long de la direction circonférentielle du bandage pneumatique (S) ;
la surface de contact au sol (3) de la section de bande de roulement (2) est divisée en : deux zones centrales (7A, 7B), agencée chacune entre une ligne médiane (CL), dans la direction de la largeur du bandage pneumatique (W), et une ligne de division (K) espacée d'un quart de la distance (H/4) d'une largeur de contact au sol de la bande de roulement (H) de la ligne médiane (CL) vers un côté externe, dans la direction de la largeur du bandage pneumatique (W) ; et deux zones d'épaulement (8A, 8B), agencées chacune entre une ligne de division respective (K) et une extrémité de contact au sol de la bande de roulement (TE) sur un côté externe de la ligne de division respective (K), dans la direction de la largeur du bandage pneumatique (W) ; **caractérisé en ce que** :
lorsqu'une valeur moyenne du nombre de crampons (5) de chaque rangée circonférentielle de crampons (6) agencée dans les ozones centrales (7A, 7B) est exprimée par Nc, la valeur moyenne Nc étant calculée en divisant le nombre total de crampons (5) de toutes les rangées circonférentielles de crampons (6) agencées dans les zones centrales (7A, 7B) par le nombre de rangées circonférentielles de crampons (6) agencées dans les zones centrales (7A, 7B) ;
et une valeur moyenne du nombre de crampons (5) de chaque rangée circonférentielle de crampons (6) agencée dans les zones d'épaulement (8A, 8B) est exprimée par Ns, la valeur moyenne Ns étant calculée en divisant le nombre total de crampons (5) de toutes les rangées circonférentielles de crampons (6) agencées dans les zones centrales (8A, 8B) par le nombre de rangées circonférentielles de crampons (6) agencées dans les zones d'épaulement (8A, 8B), les valeurs moyennes Nc, Ns satisfont une condition de Ns > Nc.

2. Bandage pneumatique (1) selon la revendication 1, dans lequel :
lorsque dans chacune des zones d'épaulement (8A, 8B), le nombre de crampons (5) de la rangée circonférentielle de crampons (6) agencée sur le côté interne extrême, dans la direction de la largeur du bandage pneumatique (W), est exprimé par Mi, et le nombre de crampons (5) de la rangée circonférentielle de crampons (6) agencée sur le côté externe extrême, dans la direction de la largeur du bandage pneumatique (W), étant exprimé par Mo, la valeur moyenne Ns et les nombres de crampons Mi, Mo (5) satisfont une condition de Mi > Ns > Mo.

3. Bandage neumatique (1) selon les revendications 1 ou 2, dans lequel :
chaque intervalle entre les crampons L (n) satisfait une condition de 0,75 x La ≤ L (n) ≤ 1,25 x La ; et
l'un ou les plusieurs intervalles spécifiques entre les crampons satisfont chacun une condition de 1,1 x La ≤ L(n) ≤ 1,25 x La.

4. Bandage pneumatique (1) selon l'une quelconque des revendications 1 à 3, dans lequel :
au cours d'une rotation du bandage pneumatique (1), un seul crampon (5) est agencé sur une ligne de contact au sol d'engagement de la section de bande de roulement (2), dans un état dans lequel chacun des crampons (5) est agencé sur la ligne de contact au sol d'engagement de la section de bande de roulement (2), correspondant à une position d'engagement du bandage pneumatique.

5. Bandage pneumatique (1) selon l'une quelconque des revendications 1 à 3, dans lequel :
au cours de la rotation du bandage pneumatique (1), un seul crampon (5) est agencé sur une ligne de contact au sol d'engagement ou de dégagement de la section de bande de roulement (2), dans un état dans lequel chacun des crampons (5) est agencé sur la ligne de contact au sol d'engagement ou de dégagement de la section de la bande de roulement (2), correspondant à une position d'engagement ou de dégagement du bandage pneumatique.
